Europäisches Patentamt

European Patent Office

Office européen des brevets

(11) Numéro de publication: **0 157 754**
A2

# (12) DEMANDE DE BREVET EUROPEEN

(21) Numéro de dépôt: **85870044.6**

(22) Date de dépôt: **20.03.85**

(51) Int. Cl.⁴: **B 23 K 26/00**

(30) Priorité: **22.03.84 LU 85267**

(43) Date de publication de la demande: **09.10.85**
**Bulletin 85/41**

(84) Etats contractants désignés: **AT DE FR GB IT NL SE**

(71) Demandeur: **CENTRE DE RECHERCHES METALLURGIQUES CENTRUM VOOR RESEARCH IN DE METALLURGIE Association sans but lucratif, Vereniging zonder winstoogmerk Rue Montoyer, 47, B-1040 Bruxelles (BE)**

(72) Inventeur: **Crahay, Jean René, Ster, 334, B-4878 Francorchamps (BE)**

(74) Mandataire: **Lacasse, Lucien Emile et al, CENTRE DE RECHERCHES METALLURGIQUES Abbaye du Val-Benoît 11, rue Ernest Solvay, B-4000 Liège (BE)**

(54) **Procédé d'amélioration de l'état de surface d'un cylindre.**

(57) Pour améliorer l'état de surface d'un cylindre, on traite la surface dudit cylindre au moyen d'un faisceau corpusculaire polarisé que l'on focalise de façon à former des microperforations dans ladite surface. Le cylindre et le faisceau sont en mouvement l'un par rapport à l'autre, ce qui entraîne une déformation des microperforations, et le faisceau est polarisé selon un plan sensiblement perpendiculaire à la direction du mouvement responsable de la déformation des microperforations.

On améliore ainsi l'isotropie de la rugosité contrôlée de la surface.

0157754

- 1 -

## Procédé d'amélioration de l'état de surface d'un cylindre.

La présente invention concerne un procédé d'amélioration de l'état de surface d'un cylindre à l'aide d'un faisceau corpusculaire focalisé, tel qu'un faisceau laser. Ce procédé s'applique en particulier aux cylindres de laminoir ou aux cylindres utilisés dans les installations de recuit continu de bandes d'acier.

On sait que l'état de surface, et en particulier la rugosité des cylindres de laminoir influence très fortement la qualité superficielle des tôles métalliques. Une rugosité appropriée permet d'éviter le collage des spires d'une bande d'acier lors du recuit en bobine; elle agit également sur l'aptitude au formage et au revêtement des tôles.

On a déjà cherché à remplacer la rugosité aléatoire des cylindres, qu'elle soit naturelle ou obtenue par exemple par grenaillage, par une rugosité contrôlée dont la distribution pourrait être maîtrisée plus aisément.

- 2 -

0157754

Il a été proposé antérieurement, notamment dans le brevet belge N° 880.996, d'effectuer des microperforations à la surface des cylindres, au moyen d'un faisceau laser, de préférence intermittent, qui provoque une destruction localisée, par fusion, de la matière constituant la surface.

Ce procédé connu permet de conférer à la surface du cylindre une rugosité remarquablement régulière et reproductible sous la forme de micro-cratères présentant la distribution voulue. La rugosité obtenue peut cependant être affectée d'une certaine anisotropie, en raison de la forme et du profil des micro-cratères. La forme de ces micro-cratères peut en effet s'écarter sensiblement de la forme circulaire et prendre une forme ovale plus ou moins prononcée; cette déformation est vraisemblablement due au déplacement relatif du cylindre et de l'émetteur laser, ainsi qu'à la vitesse de ce déplacement. Il en résulte également une déformation du profil transversal des micro-cratères, qui ne présente plus la symétrie de révolution souhaitable pour garantir l'isotropie de la rugosité.

Pour remédier à cet inconvénient, on pourrait envisager de supprimer le mouvement relatif des divers organes pendant la durée de formation de chaque micro-cratère. Une telle solution poserait cependant divers problèmes d'ordre mécanique, susceptibles d'avoir des répercussions défavorables sur la précision et la régularité des microperforations.

La présente invention porte précisément sur un procédé permettant de remédier aux inconvénients précités sans donner lieu aux problèmes qui viennent d'être évoqués.

Le procédé qui fait l'objet de la présente invention, dans lequel on traite la surface du cylindre au moyen d'un faisceau corpusculaire focalisé de façon à former des microperforations dans cette surface est essentiellement caractérisé en ce que

- 3 -                              0157754

l'on utilise un faisceau corpusculaire polarisé.

Suivant une modalité particulièrement intéressante de mise en oeuvre du procédé de l'invention, on utilise un faisceau corpusculaire polarisé selon un plan sensiblement perpendiculaire à la direction du mouvement responsable de la déformation des microperforations.

Lorsque les microperforations sont déformées dans une direction parallèle à l'axe du cylindre, on utilise un faisceau polarisé selon un plan perpendiculaire à cet axe. Au contraire, lorsque les microperforations sont déformées dans une direction perpendiculaire à une génératrice du cylindre, on utilise un faisceau polarisé suivant un plan contenant ou parallèle à cet axe.

Suivant l'invention, on règle le degré de polarisation du dit faisceau de façon à réduire ou à supprimer la déformation des microperforations.

Selon une première variante, on ajuste le degré de polarisation du dit faisceau en fonction du taux de déformation des microperforations.

Selon une autre variante, on ajuste le degré de polarisation du dit faisceau en fonction de la vitesse du mouvement responsable de la déformation des microperforations.

Le procédé de l'invention permet de modifier la distribution de l'énergie sur la section du faisceau, de façon à former des microperforations de forme circulaire et de profil symétrique.

0157754

Il en résulte une importante amélioration de l'isotropie de la rugosité. Par un réglage approprié de l'intensité du faisceau, il permet également d'agir sur la profondeur des microperforations et sur le volume du bourrelet formé autour de celles-ci.

0157754

Revendications.

1. Procédé d'amélioration de l'état de surface d'un cylindre, dans lequel on traite la surface du dit cylindre au moyen d' un faisceau corpusculaire focalisé de façon à former des micro-perforations dans la dite surface, le dit cylindre et le faisceau étant en mouvement l'un par rapport à l'autre, caractérisé en ce que l'on utilise un faisceau corpusculaire polarisé.

2. Procédé suivant la revendication 1, caractérisé en ce que l'on utilise un faisceau polarisé selon un plan sensiblement perpendiculaire à la direction du mouvement responsable de déformations des microperforations.

3. Procédé suivant l'une ou l'autre des revendications 1 et 2, caractérisé en ce que l'on règle le degré de polarisation du dit faisceau de façon à réduire ou à supprimer la déformation des microperforations.

4. Procédé suivant la revendication 3, caractérisé en ce que l'on ajuste le degré de polarisation du dit faisceau en fonction du taux de déformation des microperforations.

5. Procédé suivant la revendication 3, caractérisé en ce que l'on ajuste le degré de polarisation du dit faisceau en fonction de la vitesse du mouvement responsable de la dite déformation des microperforations.